# FASCICULE DE BREVET EUROPEEN

(11) **EP 0 434 534 B1**
(45) Date de publication et mention de la délivrance du brevet: **10.08.1994**
(21) Numéro de dépôt: 90403625.8
(22) Date de dépôt: 17.12.1990
(51) Int. Cl.: B60N 2/44, F16B 12/38

(54) **Perfectionnements aux dispositifs d'assemblage des dossiers de sièges sur les assises correspondantes**
Verbindungselemente für Rückenlehnen mit dazugehörigen Sitzen
Assembly devices of back rests to corresponding seats

(30) Priorité: 18.12.1989 FR 8916713
(43) Date de publication de la demande: 26.06.1991
(73) Titulaire: BERTRAND FAURE AUTOMOBILE "B.F.A.", F-91300 Massy (FR)
(72) Inventeur: Courtois, Bernard, F-91150 Morigny-Champigny (FR)
(74) Mandataire: Behaghel, Pierre

(56) Documents cités:
- EP-A- 0 171 813
- US-A- 2 897 927
- US-A- 3 403 641
- US-A- 4 148 454

## Description

L'invention concerne les dispositifs d'assemblage des dossiers de siège de véhicule sur les assises correspondantes et plus particulièrement ceux, de ces dispositifs connus, comprenant de part et d'autre du siège, d'une part, deux flasques verticaux liés à l'ossature d'assise du siège, notamment par l'intermédiaire d'articulations permettant un réglage d'inclinaison du dossier et, d'autre part, deux pieds faisant partie de l'ossature du dossier.

Dans les modes de réalisation actuellement connus de ces dispositifs, les pieds sont assemblés sur les flasques par des systèmes boulons-écrous, ce qui est long, relativement coûteux, difficile à automatiser et exige des précautions particulières pour éviter les desserrages involontaires.

L'invention a pour but, surtout, de remédier à ces inconvénients en agençant les dispositifs d'assemblage du genre en question de façon telle qu'ils permettent de réaliser à bas prix des assemblages solides et d'une manière particulièrement simple, rapide et se prêtant à la robotisation.

A cet effet, les dispositifs d'assemblage du genre en question selon l'invention sont essentiellement caractérisés en ce que chacun de leurs deux pieds comprend un boîtier plat trapézoïdal ouvert à sa grande base et contenant un ressort en fil replié dont une extrémité au moins, orientée perpendiculairement aux faces parallèles trapézoïdales du boîtier, traverse une fente à bords parallèles évidée dans l'une de ces faces et en ce que chacun de leurs deux flasques forme une plaque trapézoïdale propre à se loger jointivement dans un boîtier du genre ci-dessus, l'extrémité de ressort ci-dessus traversant une fente à bords parallèles évidée dans une tranche oblique de ladite plaque, les deux fentes s'étendant sensiblement selon la direction commune des grandes bases des trapèzes, mais étant inclinées l'une sur l'autre de façon telle que la sollicitation élastique de l'extrémité de ressort qui les traverse ait pour effet de repousser la plaque contre le fond du boîtier selon la direction perpendiculaire aux grandes bases ci-dessus, et que l'introduction de ladite extrémité de ressort dans lesdites fentes soit naturellement irréversible.

Dans des modes de réalisation préférés, on a recours en outre à l'une et/ou à l'autre des dispositions suivantes :
- les deux extrémités du ressort contenu dans chaque boîtier sont orientées perpendiculairement aux faces parallèles trapézoïdales de ce boîtier et traversent respectivement deux fentes à bords parallèles évidées dans l'une de ces faces à des distances différentes de la grande base du trapèze correspondant, ces deux fentes sont décalées l'une de l'autre selon la direction de ladite grande base et les deux extrémités concernées du ressort sont sollicitées élastiquement au rapprochement mutuel et traversent respectivement en outre deux fentes à bords parallèles évidées respectivement dans les deux tranches obliques de la plaque contenue dans ledit boîtier, les diverses fentes s'étendant sensiblement selon la direction ci-dessus, mais les deux fentes traversées par une même extrémité de ressort étant inclinées l'une sur l'autre de façon telle que la sollicitation de cette extrémité ait pour effet de repousser la plaque contre le fond du boîtier selon la direction perpendiculaire à la direction ci-dessus, et que l'introduction de ladite extrémité de ressort dans lesdites fentes soit naturellement irréversible,
- l'angle d'inclinaison relatif des lignes moyennes des deux fentes traversées par une même extrémité de ressort est compris entre 5 et 12 degrés,
- la zone médiane de chaque tranche oblique de la plaque trapézoïdale, évidée par une fente est délimitée par une rampe rectiligne décalée vers l'intérieur de ladite plaque par rapport à ladite tranche d'une distance égale au diamètre du fil constitutif du ressort et ladite rampe est raccordée à la susdite fente à son extrémité la plus proche de la grande base du trapèze correspondant,
- la plaque est appliquée contre l'une des deux faces trapézoïdales du boîtier par le ressort lui-même, qui est interposé jointivement, dans ce boîtier, entre ladite plaque et l'autre face trapézoïdale dudit boîtier,
- chaque fente évidée dans l'une des deux parois trapézoïdales du boîtier s'étend parallèlement à la grande base du trapèze correspondant et chaque fente évidée dans la plaque est légèrement inclinée sur ladite grande base en se rapprochant de celle-ci au fur et à mesure que l'on se rapproche du centre de la plaque,
- l'extrémité de la plaque trapézoïdale disposée du côté de la petite base du trapèze est conformée selon une pointe de façon telle que le début de l'introduction de cette plaque dans le boîtier garni du ressort soit facilité et que cette introduction ait pour effet d'armer automatiquement ce ressort dans le sens correct.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre en élévation l'un des deux éléments constitutifs d'un dispositif d'assemblage selon l'invention.

La figure 2 montre également en élévation l'autre élément de cet assemblage, le premier étant représenté en spectre.

Les figures 3 et 4 montrent le dispositif d'assemblage complet, respectivement en coupe verticale selon III-III figure 4 et en coupe horizontale selon IV-IV figure 3.

La figure 5 est une figure explicative.

Le dispositif d'assemblage considéré est destiné à fixer un dossier de siège de véhicule sur l'assise de ce siège.

Il est composé de deux moitiés identiques prévues respectivement des deux côtés du siège.

Chacune de ces deux moitiés comprend :
- un premier élément ou boîtier plat 1 présentant la forme générale d'un trapèze isocèle à grande base B inférieure ouverte vers le bas, ce boîtier constituant l'extrémité inférieure de l'un des deux pieds de l'ossature du dossier du siège,
- et un second élément en forme de plaque trapézoïdale ou "coin" 2 élargi vers le bas et prolongeant vers le haut une platine 3 qui peut elle-même faire partie de l'ossature de l'assise du siège ou d'une articulation montée sur cette ossature et destinée à rendre possibles les réglages d'inclinaison du dossier.

Le boîtier 1 est constitué par le dos creusé d'une pièce métallique 4 élargie vers le bas selon un trapèze isocèle et repliée en U, ce dos étant refermé par un couvercle 5 présentant la même forme générale.

Ce couvercle 5 est évidé par deux fentes à bords rectilignes parallèles 6, 7 qui s'étendent parallèlement à la grande base B du trapèze, sont situées à des niveaux différents et sont décalées horizontalement l'une par rapport à l'autre, la longueur de chaque fente étant un peu inférieure à la moitié de la largeur du boîtier à son niveau.

Le boîtier contient un ressort 8 en fil d'acier recourbé dont les deux extrémités 8₁ sont orientées perpendiculairement au couvercle 5 et traversent respectivement les deux fentes 6 et 7.

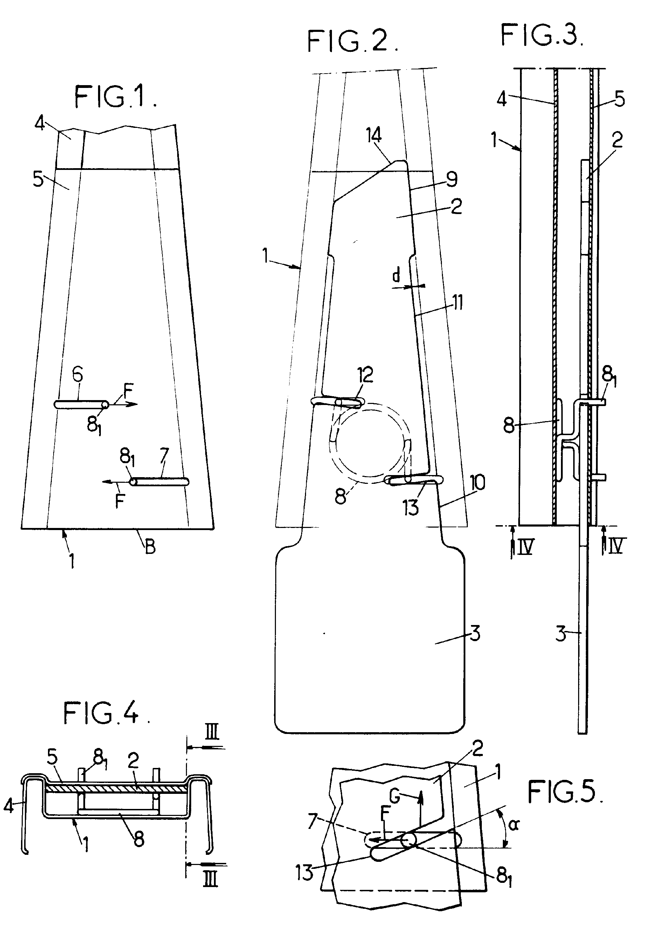

Ce ressort 8 est appliqué contre le dos creusé de la pièce 4 (voir figure 4).

Il est bandé dans un sens tel que ses deux extrémités 8₁ tendent à se rapprocher l'une de l'autre, c'est-à-dire sont sollicitées vers les fonds des fentes 6 et 7 les plus proches du plan de symétrie du boîtier 1 comme représenté par les flèches F sur la figure 1.

Pour ce qui est de la plaque ou "coin" 2, ce sont les portions terminales 9, 10 de chacune de ses deux tranches obliques qui sont destinées à venir buter en fin de course contre des portées complémentaires planes du boîtier 1 (voir figure 2).

Les portions centrales de ces deux tranches obliques sont délimitées par deux rampes 11 rectilignes et obliques qui sont décalées vers l'intérieur de la plaque, par rapport auxdites tranches, d'une distance d égale au diamètre du fil constitutif du ressort 8.

Les extrémités inférieures de ces rampes 11 sont raccordées à deux fentes 12, 13 à bords rectilignes parallèles évidées dans la plaque.

La largeur de chacune des fentes 12 et 13, tout comme celle des fentes 6 et 7 ci-dessus est très légèrement supérieure à d de façon que ces fentes puissent recevoir et guider sans serrage les extrémités du ressort.

Les décalages mutuels verticaux et horizontaux des deux fentes 12, 13, ou plus précisément de leurs centres, sont identiques à ceux des deux fentes 6 et 7 de façon que ces différentes fentes puissent coopérer deux à deux et simultanément avec les extrémités 8₁ du ressort qui les traversent tour à tour.

Les fentes 12 et 13 sont légèrement inclinées sur l'horizontale, vers le bas à partir de leur embouchure comme visible sur la figure 2 ou sur la figure 5, où l'angle d'inclinaison α correspondant a été fortement majoré pour clarifier le dessin.

Cet écart angulaire α entre les orientations des deux fentes (6,12; 7,13) coopérant avec une même extrémité de ressort 8₁ transforme la sollicitation élastique horizontale F ci-dessus décrite, exercée sur ladite extrémité 8₁, en une poussée verticale G très énergique appliquée vers le haut sur la plaque 2 et l'appliquant à son tour contre le fond du boîtier 1.

Chaque extrémité 8₁ ne peut en effet progresser vers le fond de la fente horizontale concernée (6, 7) qu'en faisant glisser contre lui le bord supérieur de la fente inclinée correspondante (12, 13) de la plaque 2, au prix d'une élévation de cette plaque.

L'ensemble est dimensionné de façon telle que l'application en question de la plaque 2 contre le fond du boîtier 1 est obtenue alors que les extrémités 8₁ ne sont pas encore parvenues au fond des fentes correspondantes.

L'angle α est choisi de façon telle que l'introduction des extrémités 8₁ dans les fentes 12, 13 soit irréversible en ce sens qu'il n'est pas possible de dégager lesdites extrémités desdites fentes en exerçant simplement des efforts de séparation entre les éléments 1 et 2: cet angle est de préférence compris entre 5 et 12°.

Le ressort 8 est dimensionné de façon telle que, à la fin du montage de la plaque 2 au fond du boîtier 1, ce ressort soit interposé jointivement, selon la direction transversale du siège, entre ladite plaque 2 et la paroi trapézoïdale du boîtier 1 autre que le couvercle 5 traversé par ledit ressort, c'est-à-dire le dos creusé, mentionné ci-dessus, de la pièce métallique 4.

Par conséquent, en fin de montage, la plaque 2 est fortement appliquée, selon ladite direction transversale, contre le couvercle 5.

Par suite en outre de la forme en coin des portées coopérantes de la plaque 2 et du boîtier 1, on obtient ainsi un assemblage mutuel solide et sans jeu de ces deux pièces.

Le dessin du ressort 8 est prévu de façon telle qu'un espace suffisant soit réservé entre sa portion repliée et le couvercle 5 pour recevoir la plaque 2.

L'extrémité supérieure de cette plaque, qui est la plus étroite, est dessinée sous la forme d'une pointe 14 pour faciliter son introduction entre les deux extrémités 8₁ du ressort.

L'assemblage mutuel des deux pièces 1 et 2 est alors réalisé très simplement par simple emmanchement vertical de la première sur la seconde.

Cet emmanchement se traduit par la succession des opérations suivantes:
- introduction de la pointe 14 entre les deux extrémités 8₁, avec écartement élastique de celles-ci, lesquelles demeurent constamment quidées dans les fentes 6 et 7,
- glissement, le long desdites extrémités 8₁, d'abord des portées obliques terminales 9 de la plaque 2, puis des rampes obliques 11 de cette plaque,
- et enfin, introduction brusque des extrémités 8₁ dans les fentes 12 et 13 avec application élastique puissante et maintenue en permanence de la plaque 2 contre le fond du boîtier 1.

Le montage ainsi réalisé est extrêmement solide puisque, pour séparer les deux pièces 1 et 2 ainsi réunies, il faudrait cisailler les extrémités 8₁ du ressort 8.

Or la constitution et le diamètre de ce ressort exclut une telle éventualité: dans des modes de réalisation avantageux, le ressort 8 est constitué par un fil d'acier présentant un diamètre de 2 mm.

Les pièces 1 et 2 ainsi assemblées, c'est-à-dire en pratique le dossier et l'assise du siège qui sont équipés respectivement de ces deux pièces, ne peuvent donc plus être séparés involontairement après réalisation de l'assemblage indiqué ci-dessus.

Mais cet assemblage n'est pas autant définitivement irréversible.

On peut en effet séparer les pièces 1 et 2 en écartant les extrémités 8₁ l'une de l'autre suffisamment pour qu'elles soient totalement dégagées des fentes 12 et 13, puis en dégageant alors verticalement la pièce 1 de la pièce 2 concernée en faisant glisser lesdites extrémités 8₁ contre les rampes obliques 11, puis contre les portions hautes 9 des tranches du coin 2.

Pour obtenir un tel écartement mutuel des extrémités 8₁, il convient de recourir à un outil spécial, par exemple en forme de coin, propre à être introduit entre les deux extrémités 8₁ à écarter mutuellement.

Un tel outil peut également être un outil rotatif évidé de deux fentes incurvées à écartement progressif.

En suite de quoi et quel que soit le mode de réalisation adopté, on obtient finalement des dispositifs d'assemblage de dossiers de sièges de véhicule sur les assises correspondantes dont la constitution et la mise en oeuvre résultent suffisamment de ce qui précède.

Ces dispositifs présentent de nombreux avantages par rapport à ceux antérieurement connus, en particulier les suivants :
- ils rendent possibles des assemblages extrêmement faciles, rapides et solides, se prêtant parfaitement à l'automatisation,
- ces assemblages sont obtenus par des moyens particulièrement économiques puisque le prix d'un ressort du type du ressort 8 ci-dessus décrit est inférieur à celui des systèmes boulons-écrous multiples de diamètres suffisants généralement adoptés pour assumer avec sécurité la fonction désirée.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment:
- celles où les inclinaisons des fentes évidées respectivement dans la plaque et dans le boîtier seraient différentes de celles indiquées ci-dessus à condition bien entendu que les inclinaisons des deux fentes traversées par une même extrémité de ressort diffèrent l'une de l'autre dans le sens pour lequel la sollicitation élastique de cette extrémité se traduit par une application de la plaque 2 contre le fond du boîtier 1, les deux fentes 12 et 13 évidées dans la plaque pouvant être par exemple horizontales alors que les fentes 6 et 7 évidées dans le boîtier seraient inclinées sur l'horizontale en s'élevant vers le plan de symétrie du boîtier,
- celles où le fil constitutif du ressort aurait une section autre que circulaire, par exemple carrée ou aplatie de façon telle que les portées de ce fil venant en contact avec les bords en regard des fentes qu'il traverse présentent des surfaces plus importantes que pour un fil rond,
- et celles où seule une extrémité du ressort serait agencée de façon à coopérer avec une paire de fentes à bords parallèles dont les lignes moyennes sont inclinées l'une sur l'autre de la manière ci-dessus décrite, l'autre extrémité dudit ressort étant alors fixée dans le boîtier de toute manière désirable, le diamètre du ressort étant alors augmenté en conséquence.

## Revendications

1. Dispositif d'assemblage de dossier de siège de véhicule sur l'assise correspondante, comprenant de part et d'autre du siège, d'une part, deux flasques verticaux liés à l'ossature d'assise du siège et, d'autre part, deux pieds faisant partie de l'ossature du dossier, caractérisé en ce que chacun de ses deux pieds comprend un boîtier plat trapézoïdal (1) ouvert à sa grande base (B) et contenant un ressort (8) en fil replié dont une extrémité (8₁) au moins, orientée perpendiculairement aux faces parallèles trapézoïdales du boîtier, traverse une fente (6, 7) à bords parallèles évidée dans l'une de ces faces et en ce que chacun de ses deux flasques forme une plaque trapézoïdale (2) propre à se loger jointivement dans un boîtier du genre ci-dessus, l'extrémité de ressort ci-dessus traversant une fente (12, 13) à bords parallèles évidée dans une tranche oblique de ladite plaque, les deux fentes s'étendant sensiblement selon la direction commune des grandes bases (B) des trapèzes, mais étant inclinées l'une sur l'autre de façon telle que la sollicitation élastique de l'extrémité de ressort (8₁) qui les traverse ait pour effet de repousser la plaque (2) contre le fond du boîtier (1) selon la direction perpendiculaire aux grandes bases ci-dessus, et que l'introduction de ladite extrémité de ressort dans lesdites fentes soit naturellement irréversible.

2. Dispositif d'assemblage selon la revendication 1, caractérisé en ce que les deux extrémités (8₁) du ressort (8) contenu dans chaque boîtier (1) sont orientées perpendiculairement aux faces parallèles trapézoïdales de ce boîtier et traversent respectivement deux fentes (6, 7) à bords parallèles évidées dans l'une de ces faces à des distances différentes de la grande base du trapèze correspondant, en ce que ces deux fentes sont décalées l'une de l'autre selon la direction de ladite grande base et en ce que les deux extrémités concernées (8₁) du ressort sont sollicitées élastiquement au rapprochement mutuel et traversent respectivement en outre deux fentes (12, 13) à bords parallèles évidées respectivement dans les deux tranches obliques de la plaque (2) contenue dans ledit boîtier, les diverses fentes s'étendant sensiblement selon la direction ci-dessus, mais les deux fentes (6, 12; 7, 13) traversées par une même extrémité de ressort étant inclinées l'une sur l'autre de façon telle que la sollicitation de cette extrémité ait pour effet de repousser la plaque contre le fond du boîtier selon la direction perpendiculaire à la direction ci-dessus, et que l'introduction de ladite extrémité de ressort dans lesdites fentes soit naturellement irréversible.

3. Dispositif d'assemblage selon l'une quelconque des revendications 1 et 2, caractérisé en ce que l'angle d'inclinaison relatif des lignes moyennes des deux fentes traversées par une même extrémité de ressort est compris entre 5 et 12 degrés.

4. Dispositif d'assemblage selon l'une quelconque des précédentes revendications, caractérisé en ce que la zone médiane de chaque tranche oblique de la plaque trapézoïdale (2), évidée par une fente (12, 13) est délimitée par une rampe rectiligne (11) décalée vers l'intérieur de ladite plaque par rapport à ladite tranche d'une distance égale au diamètre du fil constitutif du ressort (8) et en ce que ladite rampe est raccordée à la susdite fente à son extrémité la plus proche de la grande base du trapèze correspondant.

5. Dispositif d'assemblage selon l'une quelconque des précédentes revendications, caractérisé en ce que la plaque (2) est appliquée contre l'une des deux faces trapézoïdales (5) du boîtier (1) par le ressort (8) lui-même, qui est interposé jointivement, dans ce boîtier, entre ladite plaque et l'autre face trapézoïdale dudit boîtier.

6. Dispositif d'assemblage selon l'une quelconque des précédentes revendications, caractérisé en ce que chaque fente (6, 7) évidée dans l'une des deux parois trapézoïdales du boîtier (1) s'étend parallèlement à la grande base du trapèze correspondant et en ce que chaque fente (12, 13) évidée dans la plaque (2) est légèrement inclinée sur ladite grande base en se rapprochant de celle-ci au fur et à mesure que l'on se rapproche du centre de la plaque.

7. Dispositif d'assemblage selon l'une quelconque des précédentes revendications, caractérisé en ce que l'extrémité de la plaque trapézoïdale (2) disposée du côté de la petite base du trapèze est conformée selon une pointe (14) de façon telle que le début de l'introduction de cette plaque dans le boîtier garni du ressort (8) soit facilité et que cette introduction ait pour effet d'armer automatiquement ce ressort dans le sens correct.

## Patentansprüche

1. Vorrichtung zum Verbinden der Rückenlehne eines Kraftfahrzeugsitzes mit dem zugehörigen Sitzteil, die auf beiden Seiten des Sitzes einerseits zwei senkrechte Flansche, die mit dem Gestell des Sitzteils verbunden sind und andererseits zwei Fußstücke enthält, die Teil des Gestells der Rückenlehne sind, dadurch gekennzeichnet, daß beide Fußstücke aus einem flachen, trapezförmigen Gehäuse (1) bestehen, das an seiner größeren Basis (B) offen ist und eine Feder (8) aus einem umgebogenen Draht enthält, wobei wenigstens ein Ende (8₁) der Feder, das senkrecht zu den parallel verlaufenden trapezförmigen Flächen des Gehäuses ausgerichtet ist, einen Schlitz (6, 7) mit parallelen Rändern durchquert, der in einer der Flächen ausgenommen ist und daß jeder der beiden Flansche eine trapezförmige Platte (2) bildet, die sich dicht in eins der Gehäuse der obigen Art einsetzen läßt, wobei das Ende der erwähnten Feder einen Schlitz (12, 13) mit parallelen Rändern durchquert, der in einem Rand der Platte mit schräg verlaufender Schnittfläche ausgenommen ist und die beiden Schlitze sich im wesentlichen in der den großen Basen (B) der Trapeze gemeinsamen Richtung erstrecken, jedoch zueinander derart geneigt verlaufen, daß die elastische Beanspruchung des Endes der Feder (8₁), das diese durchquert, dazu führt, daß die Platte senkrecht zu den großen oben genannten Basen gegen den Boden des Gehäuses (1) gedrückt wird, und daß die Einführung des Endes der Feder in die Schlitze selbstverständlich irreversibel ist.

2. Vorrichtung nach Anspruch 1, dadurch gekennzeichnet, daß die beiden Enden (8₁) der Feder (8), die in jedem Gehäuse (1) vorhanden ist, senkrecht zu den parallelen, trapezförmigen Flächen dieses Gehäuses ausgerichtet sind und entsprechend zwei Schlitze (6, 7) mit parallelen Rändern durchqueren, die in einer der Flächen in unterschiedlichen Abständen von der großen Basis des entsprechenden Trapezes ausgenommen sind, daß die beiden Schlitze in der Richtung der genannten großen Basis versetzt zueinander angeordnet sind, und daß die beiden betreffenden Enden (8₁) der Feder auf gegenseitige Annäherung elastisch beansprucht werden und darüber hinaus zwei Schlitze (12, 13) mit parallelen Rändern durchqueren, die jeweils in einem schräg verlaufenden Rand der in dem Gehäuse befindlichen Platten (2) ausgenommen sind, wobei die verschiedenen Schlitze sich im wesentlichen gemäß der oben erwähnten Richtung erstrecken, jedoch die beiden Schlitze (6, 12; 7, 13), durch die dasselbe Ende der Feder hindurchtritt zueinander derart geneigt verlaufen, daß die Beanspruchung dieses Endes dazu führt, daß die Platte senkrecht zu der oben erwähnten Richtung gegen den Boden des Gehäuses zurückgedrückt wird, und daß die Einführung des Endes der Feder in die Schlitze selbstverständlich irreversibel ist.

3. Vorrichtung nach einem der Ansprüche 1 und 2, dadurch gekennzeichnet, daß der relative Neigungswinkel der Mittellinien der beiden Schlitze, durch die dasselbe Ende der Feder tritt, zwischen 5° und 12° liegt.

4. Vorrichtung nach einem der vorhergehenden Ansprüche, dadurch gekennzeichnet, daß der mittlere Bereich jedes geneigt verlaufende Schnittflächen enthaltenden Randes der trapezförmigen Platte (2), die mit einem Schlitz (12, 13) versehen ist, durch eine geradlinige Rampe (11) begrenzt wird, die zum Inneren der Platte in bezug auf den erwähnten Rand um einen Abstand versetzt ist, der dem Durchmesser des Drahtes entspricht, der die Feder (8) bildet, und daß die Rampe an den erwähnten Schlitz an dem Ende angeschlossen ist, das am nächsten an der großen Basis des zugehörigen Trapezes liegt.

5. Vorrichtung nach einem der vorhergehenden Ansprüche, dadurch gekennzeichnet, daß die Platte (2) gegen eine der beiden trapezförmigen Flächen (5) des Gehäuses (1) durch die Feder (8) selbst gedrückt wird, die zwischen der Platte und der anderen trapezförmigen Fläche des Gehäuses dicht in dieses eingesetzt ist.

6. Vorrichtung nach einem der vorhergehenden Ansprüche, dadurch gekennzeichnet, daß sich jeder Schlitz (6, 7) der in einer der beiden trapezförmigen Wände des Gehäuses (1) ausgenommen ist, parallel zu der großen Basis des zugehörigen Trapezes erstreckt, und daß jeder Schlitz (12, 13), der in der Platte (12) ausgenommen ist, leicht geneigt zu der großen Basis verläuft, und sich dieser, je mehr man an dem Mittelpunkt der Platte herankommt, nähert.

7. Vorrichtung nach einem der vorhergehenden Ansprüche, dadurch gekennzeichnet, daß das Ende der trapezförmigen Platte (2), das auf der Seite der kleinen Basis des Trapezes liegt, in eine Spitze (14) ausläuft, so daß der Beginn der Einführung dieser Platte in das mit der Feder (8) ausgestattete Gehäuse erleichtert wird und die Einführung bewirkt, daß die Feder selbsttätig in der korrekten Richtung gespannt wird.

## Claims

1. Device for assembling a vehicle seat back on the corresponding sitting portion, comprising on each side of the seat, on the one hand, two vertical flanges connected to the framework of the sitting portion of the seat and, on the other hand, two feet forming part of the framework of the seat back, characterized in that each of the two feet comprises a flat trapezoidal case (1) open at its large base (B) and containing a bent wire spring (8) one end (8₁) at least of which, oriented perpendicularly to the parallel trapezoidal faces of the case, passes through a slot (6; 7) with parallel edges formed in one of these faces and in that each of its two flanges forms a trapezoidal plate (2) which can be housed jointingly in a case of the above kind, the above spring end passing through a slot (12, 13) with parallel edges formed in an oblique edge of said plate, the two slots extending substantially in the common direction of the large bases (B) of the trapeziums, but being inclined with respect to each other so that the resilient force of the spring end (81) which passes through them results in pushing the plate (2) back against the bottom of the case (1) in the direction perpendicular to the above large bases, and so that introduction of said spring end into said slots is naturally irreversible.

2. Assembly device according to claim 1, characterized in that the two ends (8₁) of the spring (8) contained in each case (1) are oriented perpendicularly to the parallel trapezoidal faces of this case and pass respectively through two slots (6; 7) with parallel edges formed in one of these faces at different distances from the large base of the corresponding trapezium, in that these two slots are offset one from the other in the direction of said large base and in that the two ends concerned (8₁) of the spring are urged resiliently mutually towards each other and further pass respectively through two slots (12, 13) with parallel edges formed respectively in the two oblique edges of the plate (2) contained in said case, the different slots extending substantially in the above direction, but the two slots (6, 12; 7, 13) through which the same spring end passes being inclined with respect to each other so that urging of this end results in pushing the plate back against the bottom of the case in the direction perpendicular to the above direction, and so that introduction of said spring end into said slots is naturally irreversible.

3. Assembly device according to any one of claims 1 and 2, characterized in that the relative angle of inclination of the mean lines of the two slots through which the same spring end passes is between 5 and 12 degrees.

4. Assembly device according to any one of the preceding claims, characterized in that the median zone of each oblique edge of the trapezoidal plate (2), formed by a slot (12, 13) is defined by a rectilinear ramp (11) offset inwards of the plate with respect to said edge by a distance equal to the diameter of the wire forming the spring (8) and in that said ramp is connected to said slot at its end the closest to the large base of the corresponding trapezium.

5. Assembly device according to any one of the preceding claims, characterized in that the plate (2) is applied against one of the two trapezoidal faces (5) of the case (1) by the spring (8) itself, which is interposed jointingly, in this case, between said plate and the other trapezoidal face of said case.

6. Assembly device according to any one of the preceding claims, characterized in that each slot (6, 7) formed in one of the two trapezoidal walls of the case (1) extends parallel to the large base of the corresponding trapezium and in that each slot (12, 13) formed in the plate (2) is inclined slightly with respect to said large base while drawing closer thereto the nearer the centre of the plate.

7. Assembly device according to any one of the preceding claims, characterized in that the end of the trapezoidal plate (2) disposed on the same side as the small base of the trapezium is formed as a point (14) so that the beginning of introduction of this plate into the case fitted with the spring (8) is facilitated and so that such introduction results in automatically setting this spring in the correct direction.
